# EUROPEAN PATENT APPLICATION

(11) **EP 1 860 602 A1**
(43) Date of publication of application: **28.11.2007**
(21) Application number: 07009170.7
(22) Date of filing: 07.05.2007
(51) Int. Cl.: G06Q 10/00, G09B 7/00

(54) **Method and system for user-role-based user interface navigation**

(30) Priority: 15.05.2006 US 383274
(71) Applicant: SAP AG, 69190 Walldorf (DE)
(72) Inventor: Friedland, Liam, Redwood City CA 94061 (US); Hilgers, Peer, 68789 St. Leon-Rot (DE); Naeve, Nis Boy, 69168 Wiesloch (DE)
(74) Representative: Müller-Boré & Partner Patentanwälte

(57) **Abstract**

Embodiments of the present invention relate to a method and system wherein a user interface presents options for role-based functionality. The interface may further provide a tabbed representation of launched transactions, and navigation fields that make it easy to go from transaction to transaction or to launch new transactions.

## Description

### BACKGROUND OF THE INVENTION

Businesses large and small use computers to help in their operations. For example, enterprise resource management ("ERP") applications assist businesses to manage internal processes to accomplish business tasks and to manage interactions with the businesses' partners. A manufacturing concern undertakes substantial efforts to sell its products to customers, generating sales orders, quotes and other work product in the process. The manufacturing concern also typically buys materials and supplies from vendors, generating purchase orders and other work product as part of this concern. The manufacturing concern also must manage the hiring of employees to run its activities. The manufacturing concern may hire employees who specialize in each of these areas of operation - product sales, materials purchasing and human resources (among others). Thus, various employees may have predefined roles within their organization and responsibilities that are defined by their roles.

Traditionally, ERP applications are feature-rich computer applications. When used with very large businesses, an ERP application may have functionality to support customer-relationship management and other sales activity, materials management and other purchasing activity and human resources activity. ERP applications typically have user interfaces that match the rich feature set provided by the application. In known systems, such user interfaces may include long, comprehensive menus that list extensive arrays of virtually all functionality possible on the system. Such an excess of information may overwhelm a user and make the interface difficult and time-consuming to use. For example, a purchasing agent might need to peruse all the functions of a manager, or a human resources worker, or a sales agent, before finding the functions that he or she needs to perform his or her job. This can be frustrating and reduce efficiency.

### BRIEF DESCRIPTION OF THE DRAWINGS

FIGs. 1-9 show example screen displays of a user interface according to embodiments of the present invention;

FIG. 10 shows a system according to embodiments of the present invention; and

FIG. 11 shows a method according to embodiments of the present invention.

### DETAILED DESCRIPTION

Embodiments of the present invention address the above-noted concerns. The embodiments relate to a method and system wherein a user interface presents options for role-based functionality. In embodiments, the user interface may be for an ERP application. "Role-based" means related to a person's role within a business or other organization (e.g., the person is a manager, or a purchasing or sales agent, or works in human resources, or the like). The user interface may, thus, reduce a large, comprehensive set of possible activities within an organization to a condensed set that is more manageable and better tailored to an individual role. In this way, a user need not deal with overwhelming volumes of information as in conventional systems. Moreover, embodiments of the present invention provide an intuitive, easy-to-use interface via which multiple transactions may be launched and be simultaneously available for activation. The interface provides a tabbed representation of launched transactions, and navigation fields that make it easy to go from transaction to transaction or to launch new transactions.

The role-based set of activities may each be associated with one or more transactions that are a subset of or fall within the general category of the activity. The transactions may be launched from a window corresponding to a selected activity.

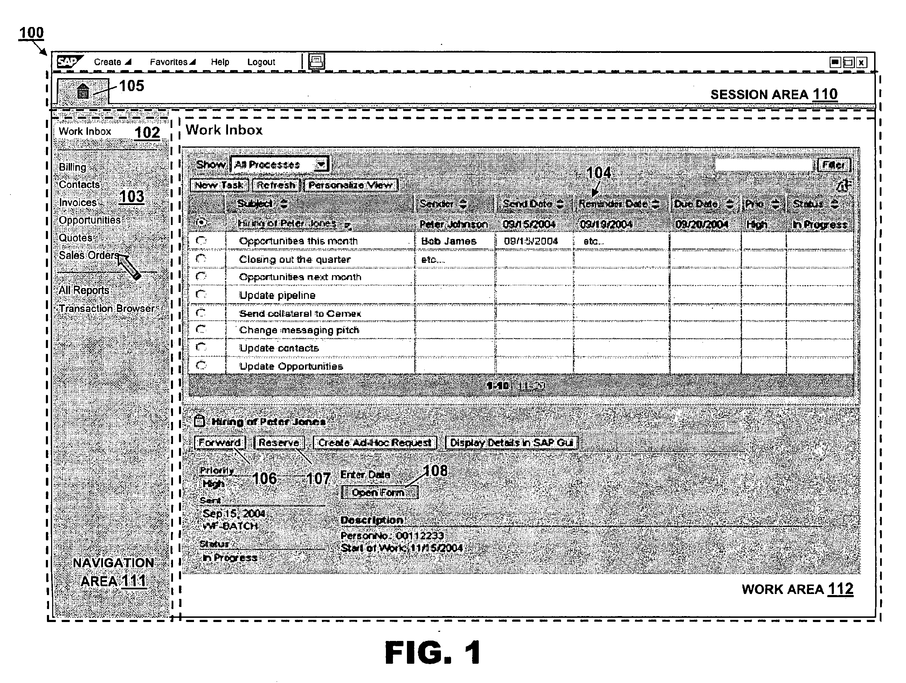

FIG. 1 shows an illustrative example of a screen display 100 of a user interface according to embodiments of the present invention. The display 100 may include a session area 110, a navigation area 111, and a work area 112. The contents of one or more of these areas may be determined by a user's role. For example, the navigation area 111 may include fields for navigating among general, aggregated role-based tasks and specific, categorized role-based activities. The work area 112 may be used to select and work on a task or activity. The session area 110 may include indicators of launched transactions corresponding to the specific, categorized role-based activities.

More specifically, the navigation area 111 may include a "Work Inbox" field 102 and a field 103 identifying a role-based set of activities. The role-based set of activities 103 may be tailored to a particular organizational role or even a particular individual. In this example the activities include "Billing," "Contacts," "Invoices," "Opportunities," "Quotes" and "Sales Orders." These categories are arbitrary and others are possible. The activities may include performing transactions, some of which may involve generating reports. Work Inbox 102 may correspond to an aggregated task window 104 comprising a general, aggregated list of selectable tasks, which may be of any type (though they belong to a particular role or individual). The session area 110 may include a "Home" icon 105 for displaying the navigation area if non-displayed and navigating from a different display to the Work Inbox, as described in more detail further on.

In FIG. 1, the Work Inbox 102 is currently selected as indicated by its being highlighted. A user may open a task corresponding to the Work Inbox 102 by, e.g. "clicking" with a mouse to select a task from among tasks 104. In the example of FIG. 1, the task "Hiring of Peter Jones" is selected. The tasks may correspond to, for example, business processes implemented by software objects. By clicking on a task, the user may activate and work on the business process.

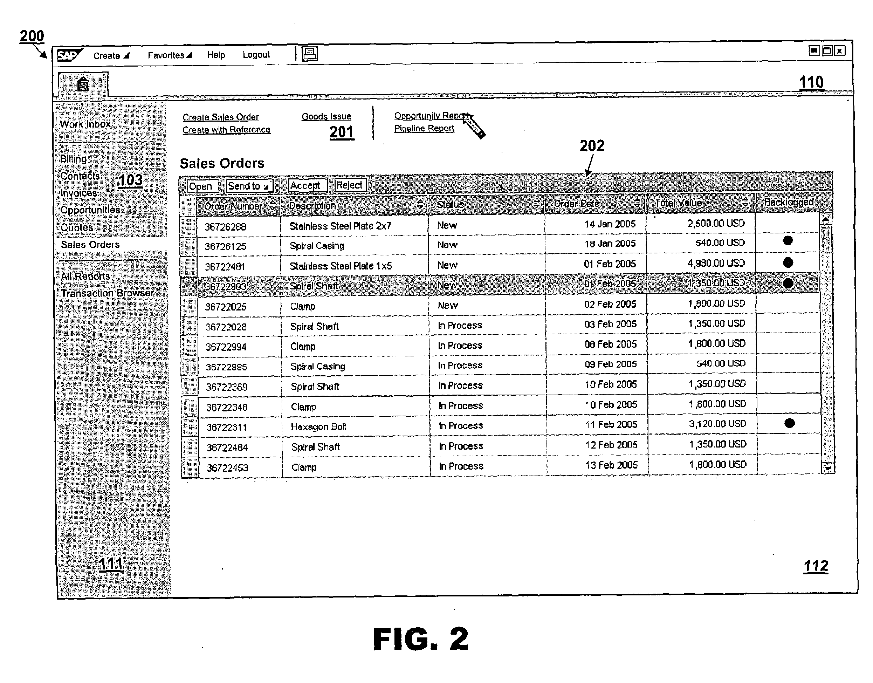

A user may select a given role-based activity by, e.g., clicking on an activity category from among activities 103 in the navigation area 111. In response, the user interface may collect/aggregate business objects from background application(s) that match both the user's role and the selected activity category. FIG. 2 shows an example of a display screen 200 resulting from clicking on the "Sales Orders" activity category in the activity set 103. The display includes a transaction field or window 201 listing one or more transactions associated with the selected activity, and an activity object window 202 comprising one or more objects associated with the selected activity, and with the particular role or individual. Thus, the objects 202 include a plurality of sales orders at some stage of processing.

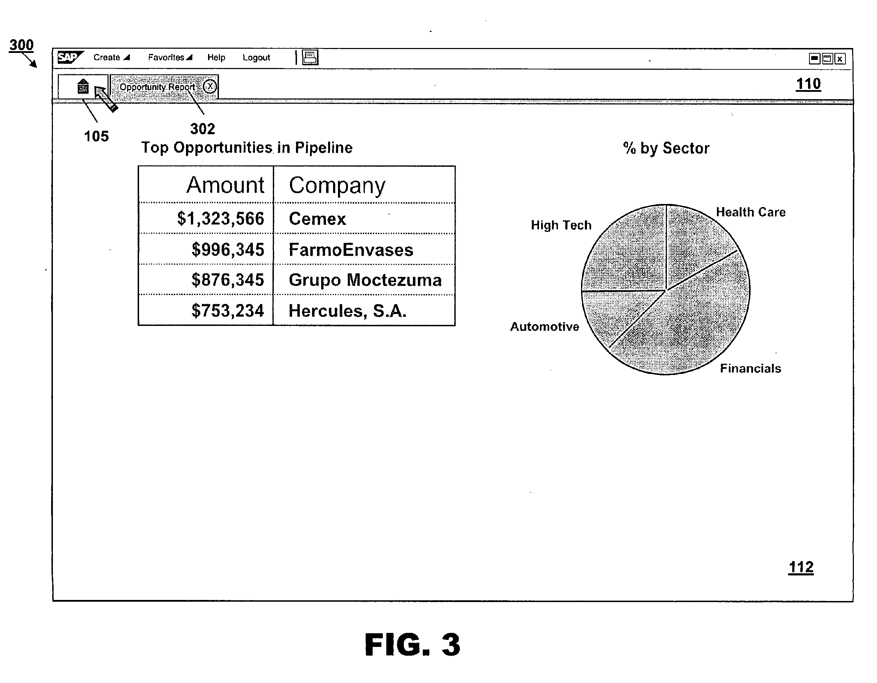

In the example of FIG. 2, the transactions 201 include "Create Sales Order," "Create with Reference," "Goods Issue," "Opportunity Report" and "Pipeline Report." A transaction may be launched from the window 201. In the example of FIG. 2, the transaction "Opportunity Report" is selected while sales order 36722983 is highlighted, indicating that a transaction to generate an "Opportunity Report" is to be launched with respect to the selected sales order. FIG. 3 shows an example of a display 300 corresponding to the selected transaction and sales order. A tab 302 may be displayed in the session area 110 to indicate the nature of the particular launched transaction (i.e., "Opportunity Report" in this example). The launched transaction may be a stateful (as opposed to stateless) session whose context is maintained in the background. The navigation area 111 is no longer displayed, which allows screen area to be devoted mainly to the work area 112 of the working session. However, the session area 110 remains displayed, allowing a user to easily navigate between launched transactions and the Work Inbox.

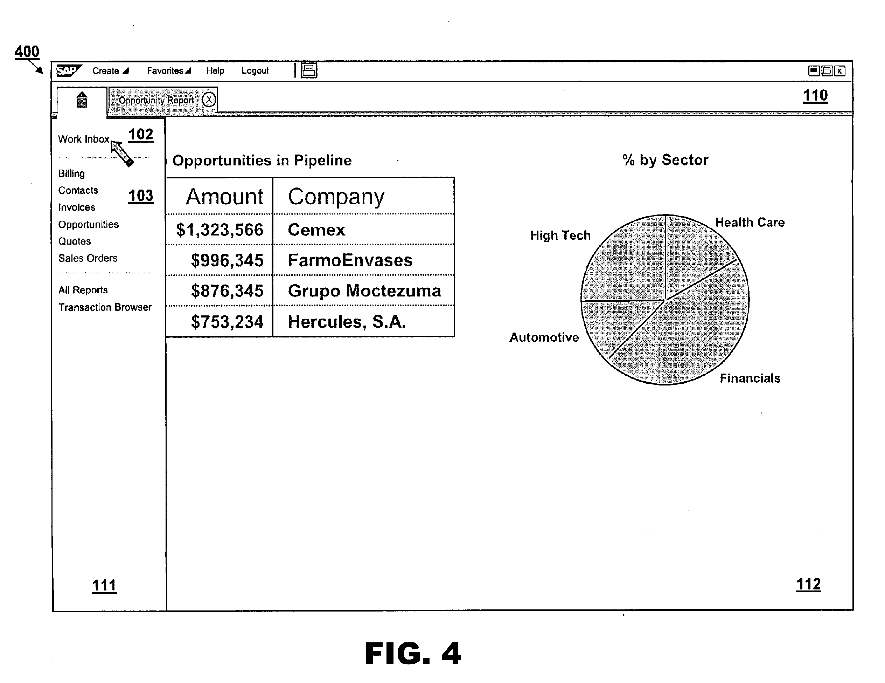

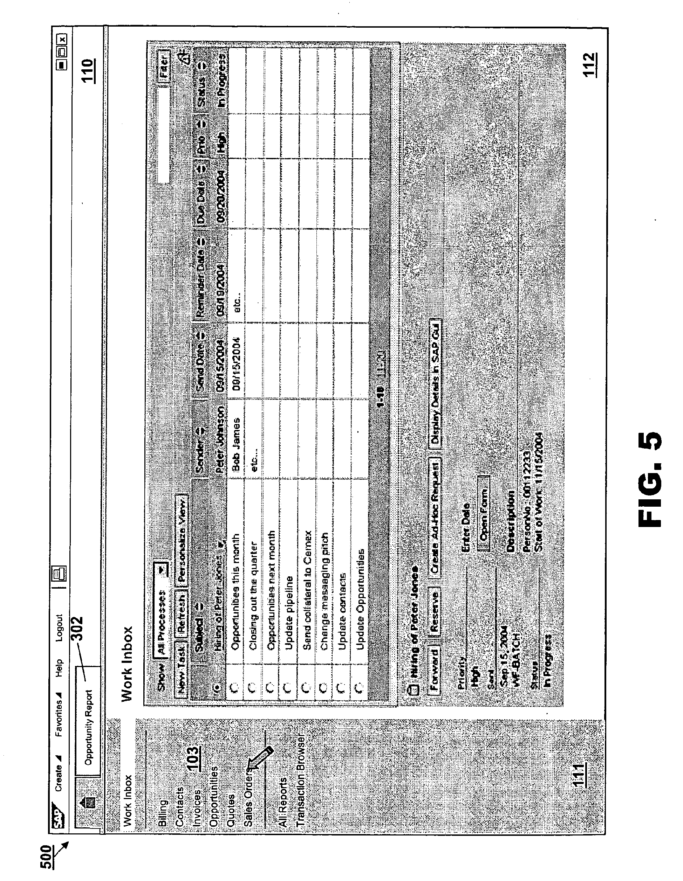

Upon user interaction with the Home tab 105, such as a "mouse-over" (i.e., causing the cursor or pointer to enter an input field, but without clicking in the input field), the navigation area 111 may be caused to appear in the working session corresponding to the launched transaction as shown in the display 400 of FIG. 4. This allows a user to easily navigate to the Work Inbox 102 or other activity 103. In the example of FIG. 4, the Work Inbox 102 is selected, resulting in the example display 500 shown in FIG. 5. FIG. 5 illustrates how clicking on the Work Inbox 102 causes the user interface to navigate from another screen display to the last selected object ("Hiring of Peter Jones" in this example) of the general, aggregated tasks 104. The "Opportunity Report" tab 302 remains displayed in the session area 110 to indicate that this transaction had been launched. This transaction could be made the active, working session by clicking on the tab 302.

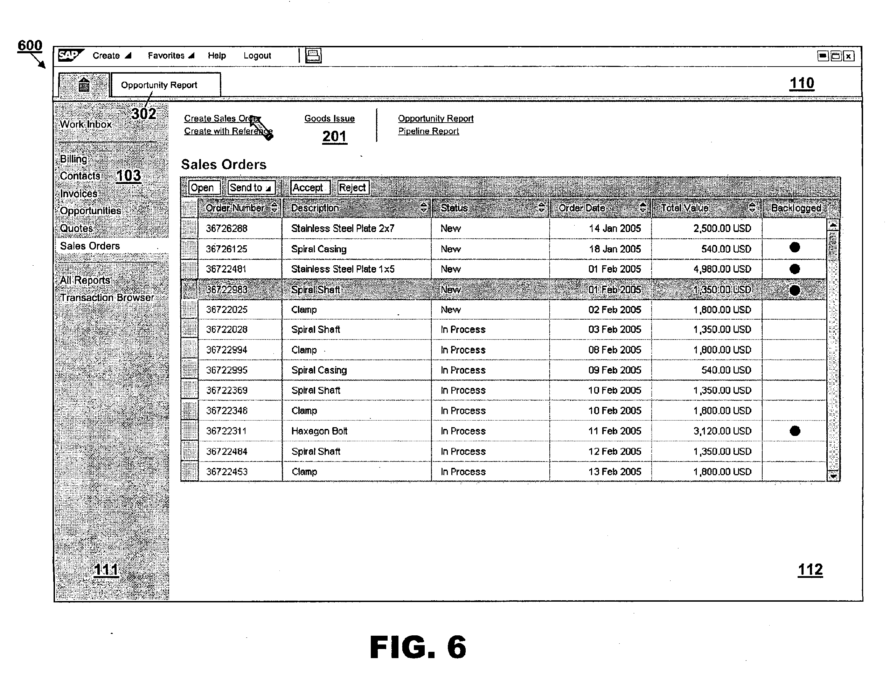

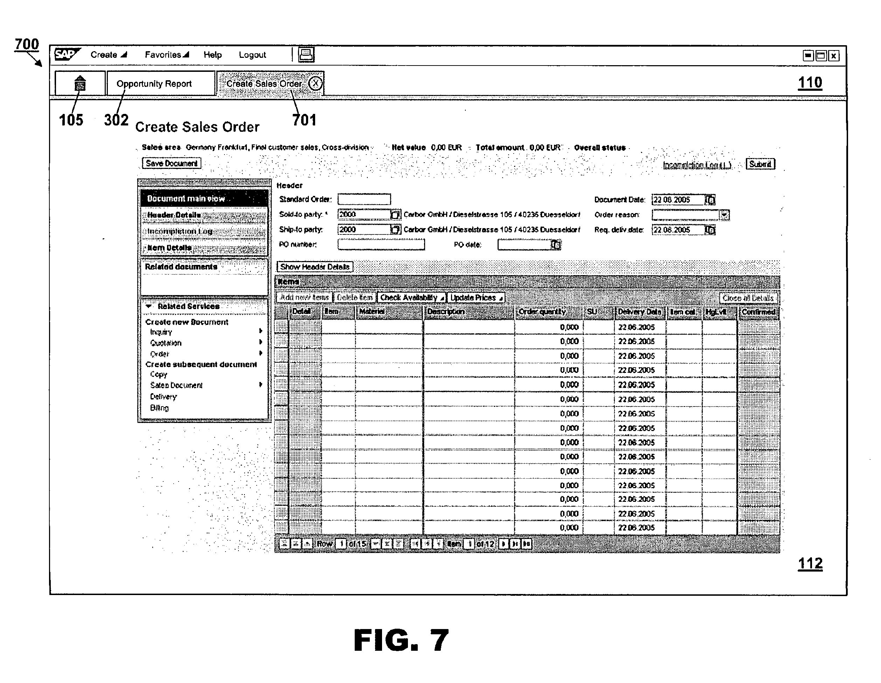

A second (or third or fourth, etc.) transaction may be launched while an earlier-launched transaction moves to the background and becomes inactive, but remains able to be activated to become the active, working session. This is shown in FIGs. 5-7. In FIG. 5, the "Sales Order" activity is again selected from among activities 103. In the resulting display screen 600 of FIG. 6, a second transaction, "Create Sales Order," is selected from the transaction window 201. As a result, a corresponding transaction is launched to become the active working session, as shown in the example display 700 of FIG. 7. Again, the navigation area 111 is no longer displayed, allowing screen area to be devoted mainly to work area 112 of the new working session. Like the "Opportunity Report" transaction 302, the "Create Sales Order" transaction may be a stateful session.

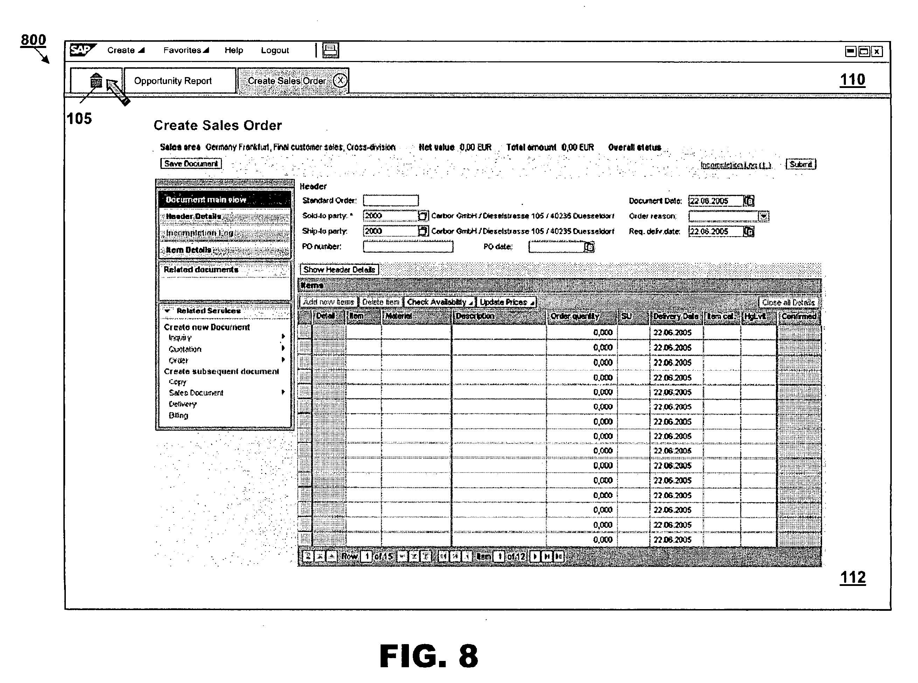

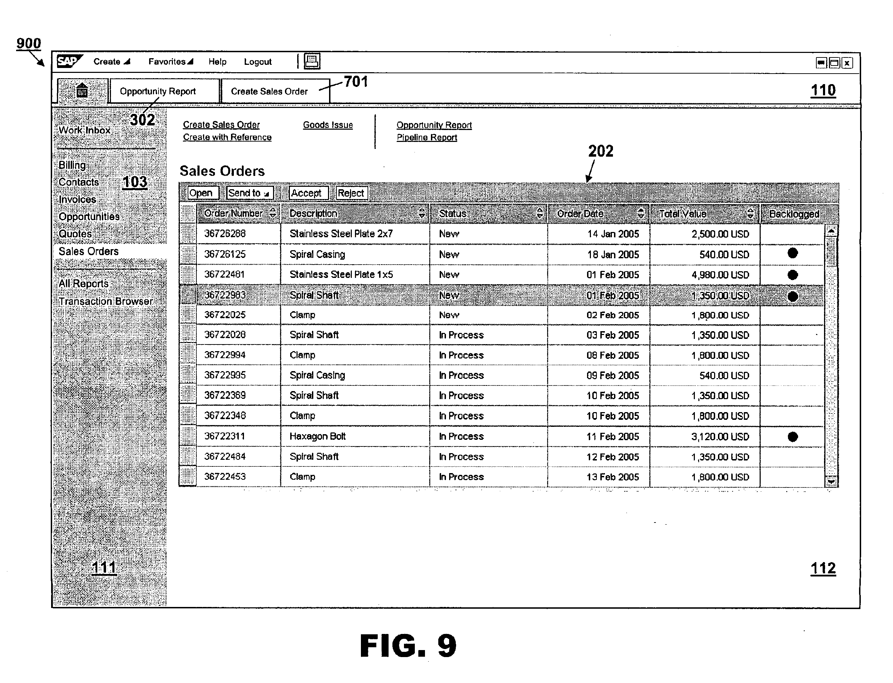

A tab 701 corresponding to the newly launched transaction is displayed in the session area 110 along with the tab 302 indicating the already launched "Opportunity Report" transaction, and the Home tab 105. This enables easy navigation. For example, a user could click on the "Opportunity Report" tab 302 to return to the already launched "Opportunity Report" transaction as represented in FIG. 3, which would then become the working session. Or, the user could click on the Home tab 105 as shown in the example display 800 of FIG. 8, in order to select another activity. This may result in a display 900 as shown by way of example in FIG. 9. In FIG. 9, the activity "Sales Order" is selected, and the corresponding list of sales order objects 202 and the previous object selection are displayed. From this display, the user could work on the previously-selected sales order or select a different sales order to work on. The launched transaction tabs 302 and 701 for the previously launched transactions remain displayed. This allows the user to easily return to and continue working on a previously launched transaction by simply clicking on the corresponding tab. When its tab is clicked on, a previously launched transaction moves to the foreground and becomes the active, working session in the user interface while the others become inactive until selected again.

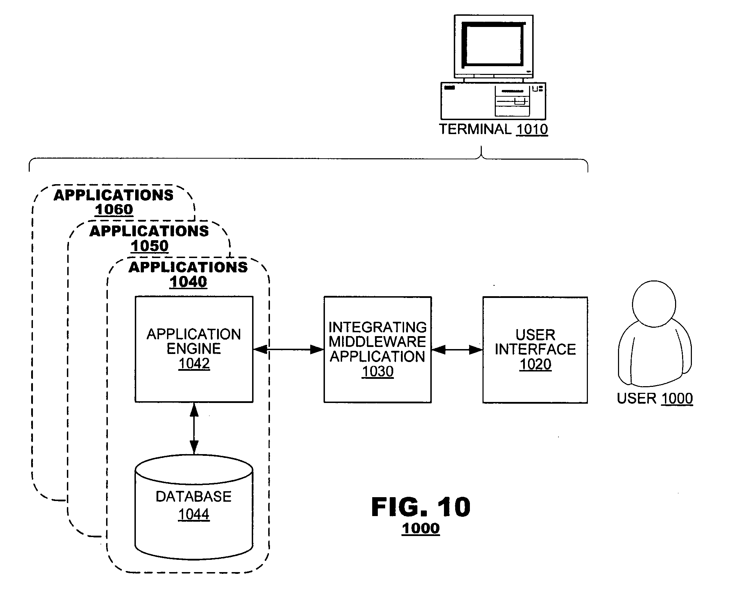

FIG. 10 illustrates a system according to an embodiment of the present invention. A terminal 1010 may be available to a user 1000. The terminal 1010 may include an output device such as a display screen and an input device such as a keyboard or a mouse. For example, the terminal 1010 may be a personal computer, a laptop computer, a tablet computer, a personal digital assistant (PDA) or a wireless device such as a cell phone.

The terminal 1010 may include a processor configured to execute various application programs such as browser programs, word processing programs, spreadsheet programs, enterprise management applications and other applications. For example, the terminal 1010 may execute an user interface 1020. For example, the user interface 1020 may be implemented as a shell program. The user interface 1020 may comprise functionality as described above in connection with FIGs. 1-9.

The user interface 1020 may be in communication with an integrating middleware application 1030. The middleware application 1030 may interface between the user interface 1020 and application 1040, which may be an ERP application. Applications 1040 may include an application engine 1042 and a database 1044. More than one application engine may be provided, but only one is depicted. For example, each application engine may execute a plurality of applications.

The application engine 1042 may execute different applications, such as a calendar software, a contacts management software, a customer data entry form, sales order creation form, or other applications. The database 1044 may include data relevant to the applications on the terminal 1010. Database 1044 may include information for each transaction or report available through the applications 1040. Database 1044 may also include business logic defining available actions in applications 1040.

The terminal 1010 may include a plurality of applications. For example, applications 1050 and 1060 may also execute on the terminal 1010. Each of applications 1040, 1050 may have a common architecture including an application engine and a database, while possessing functionality independent of each other. The applications 1040-1060, associated engines and databases may form or be part of a "back-end" responsive to a "front-end" component such as user interface 1020. For example, the back-end may include metadata and functionality configured to associate user information, such as a user role and/or identity, with corresponding role-based content to be presented in the user interface. The user interface may collect the user information, for example by way of a logon, and make a call to the back-end for the appropriate role-based content.

The terminal 1010 may include a network interface configured to communicate with a server. For example, the applications 1040 may be located at the server. In this example embodiment, the middleware application 1030 may communicate with the applications 1040 via the network interface.

A user may interact with user interface 1020 using an input device of the terminal 1010, such as a keyboard or mouse. The user interface 1020 may include computer-executable instructions according to embodiments of the present invention. The instructions, or conventional code that interfaces with the instructions, may be responsive to input signals from the input device, such as clicking on an input field of a screen display or performing a mouse-over. The instructions, or conventional code that interfaces with the instructions, may respond to the signals by performing navigation operations, launching transactions, generating corresponding displays, and so on.

Embodiments of the present invention may, for example, include object-oriented functionality. As is known, a software object may represent various relationships among data, classes, interfaces, methods, services and other object-oriented concepts. Linkages may be formed between objects. Though it is typically transparent to the object-oriented programmer, in embodiments objects may be implemented at least in part as tables comprising a plurality of modifiable entries that collectively exhibit the behavior that characterizes an object and that can logically link objects.

Computer-executable instructions according to embodiments of the present invention may be stored on any machine-readable medium, such as a RAM (random access memory), ROM (read-only memory) or fixed disk of terminal 1010, on floppy disk, CD-ROM, magnetic tape, or the like. The computer-executable instructions may be distributed across a plurality of media, such as on physically separate storage devices respectively associated with physically separate computer systems that may communicate via a network. The instructions may be loaded from a machine-readable medium into a memory of terminal 1010 for execution by a processor of terminal 1010. The instructions when executed may perform functionality according to embodiments of the present invention. The functionality disclosed herein may find specific implementations in a variety of forms, which are considered to be within the abilities of those of ordinary skill in the pertinent art after having reviewed the specification.

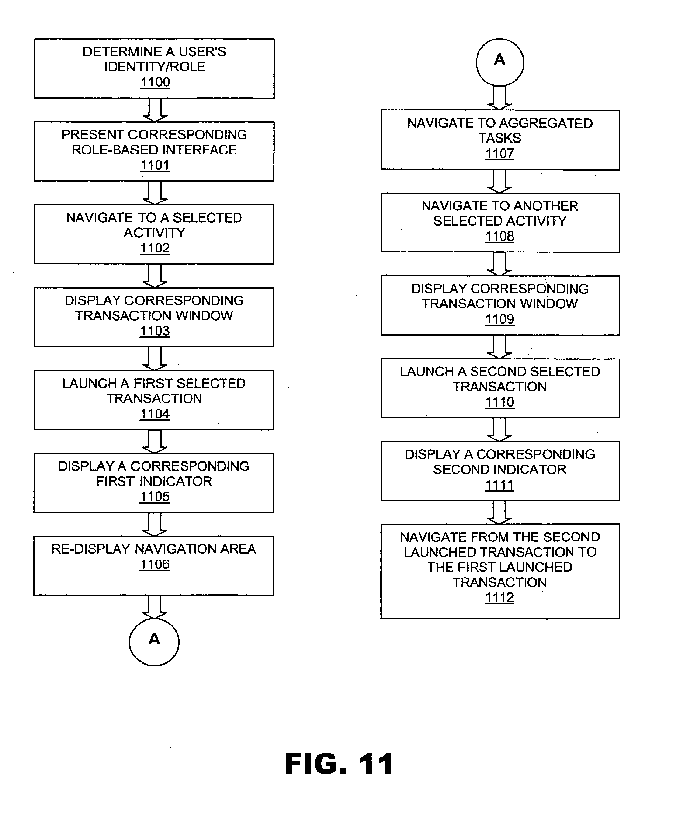

In view of the above, FIG. 11 shows a method according to embodiments of the present invention, that may be performed at least in part by executing instructions according to embodiments of the present invention on a computer such as terminal 1010.

As shown in block 1100, it may be determined, for example by way of a logon or other user identifier, what the identity and/or corresponding role of a user is. Based on the user's identity and/or role, a corresponding role-based user interface may be generated shown in block 1101. More specifically, the user interface may comprise a display presenting a navigation area with an activity set, and work area with aggregated tasks, associated with a particular role or individual.

As shown in block 1102, in response to a user input, such as a mouse signal, entered in the navigation area, the user interface may navigate to a selected activity and associated objects. A corresponding transaction window may be displayed as shown in block 1103. The navigation area may cease to be displayed. In response to a further user input in the transaction window, the user interface may launch a first selected transaction of the activity for a selected object, as shown in block 1104. The first selected transaction may become an active working session of the interface. As shown in block 1105, a corresponding first indicator, such as a tab, may be displayed for the launched transaction in a session area of the user interface.

In response to a further user input, the navigation area may be caused to be re-displayed in the working session for the launched transaction, as shown in block 1106. As shown in block 1107, in response to a further user input in the navigation area, the user interface may navigate to the work area with aggregated tasks. Alternatively, in response to a further user input in the navigation area, the user interface may navigate to another selected activity and associated objects, as shown in block 1108. A corresponding transaction window may be displayed, as shown in block 1109. As shown in block 1110, in response to a further user input in the transaction window, the user interface may launch a second selected transaction of the activity for a selected object. The second selected transaction may become the active working session of the interface while the first selected transaction moves to the background and becomes inactive. As shown in block 1111, a corresponding second indicator, such as a tab, may be displayed for the second launched transaction, along with the first indicator corresponding to the first launched transaction.

In response to a further user input in the first indicator, the user interface may navigate from the second launched transaction to the first launched transaction, as shown in block 1112. The first launched transaction may then move to the foreground and become the active, working session in the user interface, while the second launched transaction moves to the background and becomes inactive.

Several embodiments of the present invention are specifically illustrated and/or described herein. However, it will be appreciated that modifications and variations of the present invention are covered by the above teachings and within the purview of the appended claims without departing from the spirit and intended scope of the invention.

## Claims

1. A machine-readable medium tangibly embodying computer-executable instructions to implement a role-based user interface for an enterprise resource management application, the user interface including:
a navigation area to navigate among role-based tasks and activities;
a work area to select and work on a role-based task or activity; and
a session area to display indicators of launched transactions corresponding to selected activities, a previously launched but inactive transaction becoming a working session by selection of its indicator.

2. The machine-readable medium of claim 1, wherein the navigation area includes a field for navigating to a list of aggregated tasks associated with a role.

3. The machine-readable medium of claim 1 or 2, wherein the navigation area includes a role-based activity set.

4. The machine-readable medium of claim 3, wherein the work area includes a transaction window corresponding to an activity of the set, the transaction window including one or more transactions executable with respect to an object associated with the activity.

5. The machine-readable medium of claim 4, wherein the work area further includes an activity object window comprising one or more objects associated with the activity.

6. The machine-readable medium of any one of claims 2 to 5, wherein a task corresponds to a business process.

7. The machine-readable medium of any one of claims 2 to 6, wherein the work area includes a field for performing an operation to change an owner of a task.

8. The machine-readable medium of any one of the preceding claims, the user interface further comprising a field to display the navigation area if non-displayed.

9. A method for operating a role-based user interface for an enterprise resource management application, the method comprising:
determining a user's role;
based on the user's role, presenting a role-based user interface corresponding to the user's role;
in response to a user input in a navigation area of the interface, navigating to a selected role-based activity and no longer displaying the navigation area;
in response to a user input in a transaction window corresponding to the selected activity, launching a first selected transaction of the transaction window, the first selected transaction becoming an active working session of the user interface; and
displaying a first indicator for the first launched transaction in a session area of the user interface.

10. The method of claim 9, further comprising:
in response to a user input in a field of the user interface, re-displaying the navigation area; and
in response to a user input in the navigation area, navigating to another selected activity.

11. The method of claim 10, further comprising:
displaying a transaction window corresponding to the other selected activity;
in response to a user input in the transaction window, launching a second selected transaction of the transaction window, the second selected transaction becoming the active working session of the user interface; and
displaying a second indicator for the second launched transaction in the session area.

12. The method of claim 11, further comprising:
in response to a user input in the first indicator, causing the first transaction to become the active working session of the user interface.

13. The method of any one of claims 9 to 12, further comprising:
in response to a user input in a field of the user interface, re-displaying the navigation area; and
in response to a user input in the navigation area, navigating to a list of aggregated tasks associated with the role.

14. The method of claim 13, further comprising:
in response to a user input, performing an operation to change an owner of a task.

15. A machine-readable medium tangibly embodying computer-executable instructions to perform a method according to any one of claims 9 to 14.
